# EUROPÄISCHE PATENTANMELDUNG

(11) **EP 2 754 527 A1**
(43) Veröffentlichungstag der Anmeldung: **16.07.2014**
(21) Anmeldenummer: 13150979.6
(22) Anmeldetag: 11.01.2013
(51) Int. Cl.: B23K 26/34, F01D 5/00

(54) **Erzeugung von feinen Körnern beim Auftragsschweißen**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE)

(57) **Zusammenfassung**

Durch das Hin- und Herkippen der Schweißdüse pro Schweißlage wird eine sehr feinkörnige Struktur in dem mehrlagigen Materialaufbau einer gerichtet erstarrten Struktur erreicht.

## Beschreibung

Die Erfindung betrifft das Laserauftragsschweißen, insbesondere auf eine gerichtet erstarrte Struktur, wobei feine globulare Körner erzielt werden sollen.

Zu große Körner im Guss oder in einer Schweißnaht sind unerwünscht.

Es ist daher Aufgabe der Erfindung oben genanntes Problem zu lösen.

Die Aufgabe wird gelöst durch Verfahren gemäß Anspruch 1.

Beim Auftragsschweißen wird gewünscht, dass sich die Kornstruktur in jeder aufgetragenen Schicht ändert, so dass diese in einem metallographisch präparierten Schliff eine Art "Schachbrettmuster" sichtbar wird.

Die Struktur entsteht, indem beim Schweißen jeder Lage der untere Teil epitaktisch am Grundmaterial anwächst, der obere Teil jedoch mit einer anderen kristallographischen Orientierung polykristallin erstarrt. Beim Schweißen der nächsten Lage darf nur dieser letzte, polykristallin erstarrte Bereich wieder angeschmolzen werden, so dass nur der obere Bereich der Kornstruktur weiter aufwächst. Diese Gefügestruktur verkleinert die Rissanfälligkeit des Gefüges beim Schweißen und der anschließenden Wärmebehandlung, da sich die Spannungen auf viele kleine Korngrenzen verteilen können.

Um diese Struktur zu erzeugen, müssen die Verfahrensparameter (Laserleistung, Laserstrahldurchmesser, Pulvermassenstrom, Verfahrgeschwindigkeit) in sehr engen Toleranzen gehalten werden. Speziell geht bei einer Zunahme der Verfahrgeschwindigkeit das Schachbrettmuster mehr und mehr verloren. Vorgeschlagen wird einen Schweißstrahl oder einen Laserstrahl und die koaxiale Pulverzuführung nach jeder Lage wechselseitig um vorzugsweise 30° +/- 5° zu einer Oberflächesenkrechten anzustellen.

Die Schmelze erstarrt jeweils in Richtung der Laserstrahlung aufgrund des Temperaturgradienten in Richtung des Schmelzbades bzw. der Laserstrahlung. Durch die Änderung des Anstellwinkels nach vorzugsweise jeder Lage sollte jeweils ein neues Kornwachstum gestartet werden, das etwa der Lagenhöhe entspricht.

In den Unteransprüchen sind weitere vorteilhafte Maßnahmen aufgelistet, die beliebig miteinander kombiniert werden können, um weitere Vorteile zu erzielen.

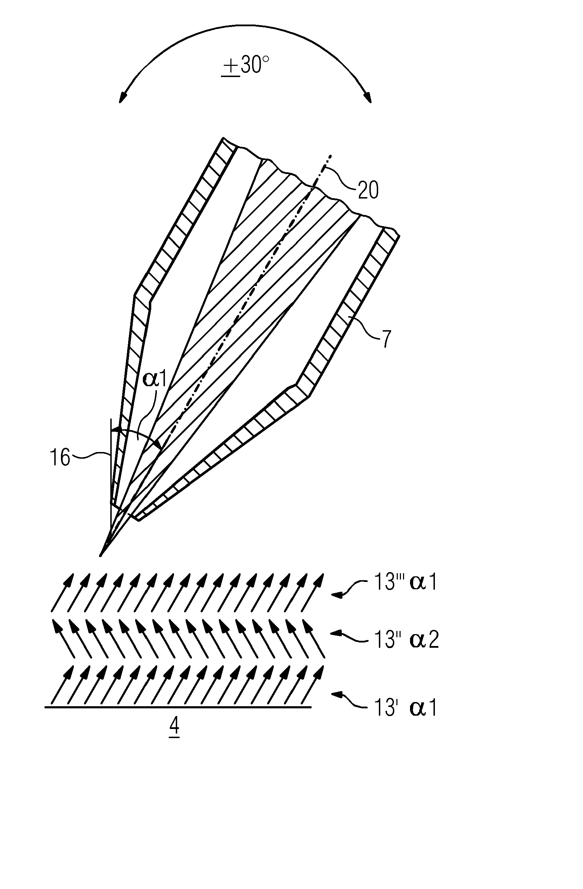

Es zeigt die Figur die schematische Darstellung der Erfindung.

Die Figur und die Beschreibung stellen nur Ausführungsbeispiele dar.

Die Figur zeigt schematisch die Vorgehensweise beim lageweisen Auftragen auf ein Substrat 4, insbesondere mit einer gerichtet erstarrten Struktur.

Die Erfindung wird nur beispielhaft erläutert anhand des Laser-Auftragsschweißens.

Durch eine entsprechende Schweißdüse 7 wird Material auf ein Substrat 4 aufgetragen, das vorzugsweise eine gerichtet erstarrte Struktur aufweist.

Dabei weist der Laser bzw. eine Mittelachse des Laserstrahls 20 einen bestimmten deutlich von 0° und 90° verschiedenen ersten Winkel α1 zu einer Oberflächensenkrechten 16 des Substrats 4 auf. Deutlich bedeutet, dass es sich nicht um Toleranzen eines 0° oder 90° Winkels handelt. Dieser Winkel α1 beträgt vorzugsweise 30°.

Nachdem eine erste Schweißlage 13' aufgebracht wurde, wird die Schweißdüse 7 in der folgenden Ebene 13" zur anderen Seite verkippt, wobei der zweite Winkel α2 zu der Oberflächensenkrechten absolut der gleiche Winkel ist, also α2 = -α1 bzw. 360°- α1.

In der Figur ist dies schematisch durch die verschiedenen Ausrichtungen der Pfeile in den einzelnen Schichten 13', 13", 13"', ... gezeigt, die die Ausrichtung des Laserstrahls 20 zum Substrat 4 anzeigen.

Für jede weitere Schweißlage 13" wird das hin- und herweise Verkippen des Schweißstrahls zur Oberfläche des Substrats 4 bzw. der zugrunde liegenden Schweißlage 13", 13"', ... vorzugsweise fortgesetzt.

Vorzugsweise wird das Verfahren angewandt bei einem Laserstrahlverfahren.

Das gerichtet erstarrte Substrat 4 ist vorzugweise aus nickelbasierten Superlegierungen hergestellt und weist einkristalline oder kolumnar erstarrte Längskörner auf und es werden polykristalline Schweißstellen erzeugt.

Durch das Verfahren werden feine Strukturen in dem aufgebauten Material erzeugt und es kommt zu keiner Förderung des Risswachstums zwischen großen und kleinen Körnern.

## Patentansprüche

1. Verfahren
zum Auftragsschweißen eines Substrats (4),
das insbesondere eine gerichtet erstarrte Struktur aufweist,
bei dem eine Schweißdüse (7) einen deutlich von 0° verschiedenen Winkel (α1, α2) zu einer Oberflächensenkrechten (16) des Substrats (4) aufweist und
zuerst eine erste Schweißlage (13') unter einem ersten von 0° verschieden Winkel (α1) zur Oberflächensenkrechten (16) erzeugt wird und
die zumindest zweite,
insbesondere direkt folgende,
Schweißlage (13") unter einem deutlich von 0° verschiedenen Winkel (α2) zur Oberflächensenkrechten (16) und von dem ersten Winkel (α1) deutlich verschiedenen Winkel (α2) deutlich erzeugt wird.

2. Verfahren nach Anspruch 1,
bei dem die gerichtet erstarrte Struktur eine kolumnar erstarrte Struktur aufweist.

3. Verfahren nach Anspruch 1,
bei dem die gerichtet erstarrte Struktur eine einkristalline Struktur aufweist.

4. Verfahren nach einem oder mehreren der Ansprüche 1, 2 oder 3,
bei dem ein Laserauftragsschweißen verwendet wird.

5. Verfahren nach einem oder mehreren der Ansprüche 1, 2, 3 oder 4,
bei dem der Winkel (α1) bezogen auf die Oberflächensenkrechte (16) 30° +/- 5° beträgt,
insbesondere 30° beträgt.

6. Verfahren nach einem oder mehreren der Ansprüche 1, 2, 3, 4 oder 5,
bei dem die zweite Schweißlage (13") unter einem zweiten Winkel (α2) von (360°-α1) bezogen auf die Oberflächensenkrechte (16) der Schweißlage (13', 13", ...) geschweißt wird.

7. Verfahren nach einem oder mehreren der Ansprüche 1 bis 6,
bei dem die Schweißdüse (7) immer abwechselnd um die Oberflächensenkrechte (16) verkippt wird,
insbesondere um den betragsmäßig gleichen Winkel.

8. Verfahren nach einem oder mehreren der Ansprüche 1 bis 7,
bei dem eine polykristalline Schweißstelle erzeugt wird.
